# FASCICULE DE BREVET EUROPEEN

(11) **EP 3 484 752 B1**
(45) Date de publication et mention de la délivrance du brevet: **02.09.2020**
(21) Numéro de dépôt: 17748826.9
(22) Date de dépôt: 10.07.2017
(51) Int. Cl.: B60R 13/08, B32B 5/18, B29C 44/12, D21H 17/35, D21H 13/40, B32B 7/08

(54) **ECRAN DE PROTECTION ACOUSTIQUE ET THERMIQUE POUR VÉHICULE AUTOMOBILE**
AKUSTISCHE UND THERMISCHE ABSCHIRMUNG FÜR EIN KRAFTFAHRZEUG
ACOUSTIC AND THERMAL SHIELD FOR A MOTOR VEHICLE

(30) Priorité: 12.07.2016 FR 1656698
(43) Date de publication de la demande: 22.05.2019
(73) Titulaire: TREVES Products, Services & Innovation, 75008 Paris (FR)
(72) Inventeur: RIBES, Stéphane, 51140 ROMAIN (FR); CAPRON, Christophe, 51490 EPOYE (FR)
(74) Mandataire: Sayettat, Julien Christian
(86) Numéro de dépôt international: PCT/FR2017/051889
(87) Numéro de publication internationale: WO 2018/011506

(56) Documents cités:
- EP-A2- 2 792 550
- FR-A1- 3 010 958
- FR-A1- 3 030 429

## Description

L'invention concerne un écran de protection acoustique et thermique pour véhicule automobile, un montage d'un tel écran et un procédé de réalisation d'un tel écran.

Il est connu de réaliser un écran de protection acoustique et thermique pour véhicule automobile, ledit écran comprenant :
- une coque tridimensionnelle poreuse thermo-comprimée à base de fibres de verre, lesdites fibres étant reliées entre elles par un agent de liaison de nature thermodurcissable, tel une résine phénolique,
- une couche ressort interne à base de mousse - notamment de polyuréthanne - élastiquement compressible,
ledit écran présentant en outre les caractéristiques suivantes :
- ladite couche est issue de moulage par injection-réaction (RIM), ladite couche surmoulant ladite coque,
- ladite coque présente une porosité agencée pour permettre à ladite mousse de pénétrer une fraction de l'épaisseur de ladite coque, de manière à créer une peau étanche, de sorte que ledit écran :
   ∘ soit isolant acoustiquement selon un principe de masse-ressort, ledit écran présentant en outre des propriétés d'absorption acoustique conférées par la fraction d'épaisseur de ladite coque non pénétrée par ladite mousse et restant poreuse,
   ∘ voie sa rigidité accrue par le renforcement apporté par lesdites fibres enrobées par ladite mousse.

Un tel agencement permet de minimiser le poids des écrans, afin d'alléger les véhicules.

En effet, il est possible de prévoir l'utilisation d'une coque de moindre masse surfacique sans dégrader la rigidité de l'écran, ceci de par le renforcement apporté par les fibres de verre - bien connues pour leur utilisation comme fibres de renfort dans les matériaux composites - enrobées par la mousse dans la fraction d'épaisseur de la coque pénétrée par ladite mousse.

Par ailleurs, la couche ressort peut être aisément conformée, du fait qu'elle est obtenue par moulage, selon des géométries complexes - en particulier non développables - telles qu'on peut les trouver pour certains composants - tels un bac à huile ou une boite de vitesse - à protéger par l'écran.

De ce fait, la face d'aspect de la couche ressort peut être conformée de manière à épouser au plus près la forme d'une paroi du composant à protéger, ce qui permet d'assurer une optimisation de l'isolation acoustique et thermique apportée par l'écran.

Enfin, une étanchéité entre la coque et la couche ressort est assurée par la pénétration de la mousse dans une fraction de l'épaisseur de la coque.

De la sorte, un tel écran est à même d'assurer une protection acoustique par isolation selon un principe de masse-ressort, la fraction d'épaisseur de la coque non imprégnée par la mousse permettant par ailleurs de réaliser une absorption acoustique.

En outre, un tel écran est à même d'assurer une protection thermique qui peut notamment être recherchée lorsque l'on souhaite confiner de la chaleur pendant une certaine durée autour du composant à protéger, ceci notamment lorsque l'on souhaite un redémarrage rapide du véhicule après que son moteur a été arrêté.

Cependant, l'utilisation d'un liant de nature thermodurcissable présente un grave inconvénient en ce que la coque présente une faible capacité à la déformation.

De ce fait, elle risque de se rompre lors de l'opération de montage de l'écran sur un composant à protéger par ledit écran.

En outre, les opérations de découpe sur la coque sont rendues difficiles du fait de son caractère cassant et de l'encrassement des outils de découpe par le liant thermodurcissable.

Enfin, on observe dans de tels écrans une difficulté à contrôler la fraction d'épaisseur de coque pénétrée par la mousse, le risque étant d'avoir une fraction trop importante qui risquerait de nuire aux propriétés d'absorption acoustique de l'écran liées à la porosité de la fraction d'épaisseur non pénétrée par la mousse.

L'invention a pour but de pallier ces inconvénients.

A cet effet, et selon un premier aspect, l'invention propose un écran de protection acoustique et thermique pour véhicule automobile, ledit écran comprenant :
- une coque tridimensionnelle poreuse thermo-comprimée à base de fibres de verre, lesdites fibres étant reliées entre elles par un agent de liaison,
- une couche ressort interne à base de mousse - notamment de polyuréthanne - élastiquement compressible,
ledit écran présentant en outre les caractéristiques suivantes :
- ladite couche est issue de moulage par injection-réaction (RIM), ladite couche surmoulant ladite coque,
- ladite coque présente une porosité agencée pour permettre à ladite mousse de pénétrer une fraction de l'épaisseur de ladite coque, de manière à créer une peau étanche, de sorte que ledit écran :
   ∘ soit isolant acoustiquement selon un principe de masse-ressort, ledit écran présentant en outre des propriétés d'absorption acoustique conférées par la fraction d'épaisseur de ladite coque non pénétrée par ladite mousse et restant poreuse,
   ∘ voie sa rigidité accrue par le renforcement apporté par lesdites fibres enrobées par ladite mousse,
- l'agent de liaison est à base de polypropylène,
- la coque comprend entre 45 et 55% en poids de fibres de verre.

Avec l'agencement proposé, l'écran présente, de par la nature thermoplastique de l'agent de liaison, une bonne aptitude à la déformation sans rupture de la coque.

De ce fait, le risque de rupture de la coque lors du montage de l'écran est écarté.

En outre, les éventuelles opérations de découpe sur la coque sont facilitées.

La demanderesse a également observé que le fait que la coque comprenne entre 45 et 55% en poids de fibres de verre, permet de réaliser une pénétration optimale de la mousse au sein de la coque, une fraction d'épaisseur suffisante de ladite coque restant exempte de mousse, ce qui permet à l'écran de présenter des propriétés d'absorption acoustique satisfaisantes.

Selon d'autres aspects, l'invention propose un montage d'un tel écran et un procédé de fabrication d'un tel écran.

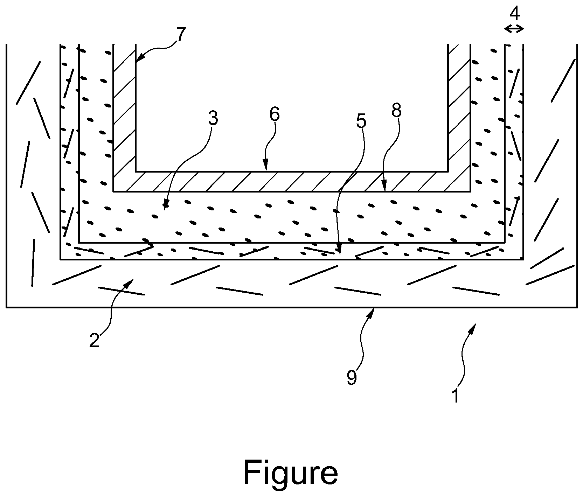

D'autres particularités et avantages de l'invention apparaîtront dans la description qui suit, faite en référence à la figure jointe qui est une vue schématique en coupe d'un montage d'un écran, selon une réalisation, sur un composant à protéger.

En référence à la figure, on décrit un écran 1 de protection acoustique et thermique pour véhicule automobile, ledit écran comprenant :
- une coque 2 tridimensionnelle poreuse thermo-comprimée à base de fibres de verre, lesdites fibres étant reliées entre elles par un agent de liaison,
- une couche ressort 3 interne à base de mousse - notamment de polyuréthanne - élastiquement compressible,
ledit écran présentant en outre les caractéristiques suivantes :
- ladite couche est issue de moulage par injection-réaction (RIM), ladite couche surmoulant ladite coque,
- ladite coque présente une porosité agencée pour permettre à ladite mousse de pénétrer une fraction 4 de l'épaisseur de ladite coque, de manière à créer une peau 5 étanche, de sorte que ledit écran :
   ∘ soit isolant acoustiquement selon un principe de masse-ressort, ledit écran présentant en outre des propriétés d'absorption acoustique conférées par la fraction d'épaisseur de ladite coque non pénétrée par ladite mousse et restant poreuse,
   ∘ voie sa rigidité accrue par le renforcement apporté par lesdites fibres enrobées par ladite mousse,
- l'agent de liaison est à base de polypropylène,
- la coque 2 comprend entre 45 et 55% en poids de fibres de verre.

Selon une réalisation, la peau 5 présente une épaisseur comprise entre 0,3 et 1 mm.

La coque 2 peut quant à elle présenter typiquement une épaisseur comprise entre 2 et 3 mm.

De façon non représentée, il peut être prévu que la coque 2 soit pourvue, sur au moins une de ses faces, d'une couche de protection en non tissé.

La présence d'une telle couche permet d'apporter une protection aux opérateurs de fabrication face aux risques de coupures par les fibres de verre contenues dans la coque 2.

Une telle couche de protection présente notamment une masse surfacique comprise entre 15 et 120g/m² et notamment une résistance au passage de l'air comprise entre 50 et 180 N.s.m⁻³.

Avec de telles caractéristiques, une couche de protection tournée vers la couche ressort 3 n'interfère sensiblement pas avec la pénétration d'une fraction 4 de l'épaisseur de la coque 2 par la mousse, pour former la peau 5.

Selon une réalisation non représentée, la face externe - c'est à dire celle opposée à la couche ressort 3 - de la coque 2 est recouverte d'une couche de revêtement, par exemple à base de tissu.

Selon une réalisation, l'agent de liaison est issu de particules de polypropylène, de manière à assurer une liaison des fibres entre elles selon une multiplicité de points de liaison, comme on l'explicitera plus loin.

On décrit à présent un montage d'un tel écran 1, ledit montage comprenant ledit écran et un composant 6 à protéger, ledit composant - par exemple sous forme de bac à huile ou de boite de vitesse - étant délimité par une paroi 7, notamment en tôle, la face d'aspect 8 de la couche ressort 3 étant conformée de manière à épouser sensiblement la forme de ladite paroi, de manière à permettre une optimisation de l'isolation acoustique et thermique.

On décrit enfin un procédé de réalisation d'un tel écran 1, ledit procédé comprenant les étapes successives suivantes :
- réaliser un mélange de fibres de verre et de particules de polypropylène, le pourcentage en poids desdites fibres par rapport au poids total desdites fibres et particules étant compris entre 45 et 55%, ledit mélange étant dispersé dans une matrice liquide,
- réaliser avec ledit mélange dispersé dans ladite matrice une nappe fibreuse déroulée en continu,
- faire passer ladite nappe dans un four de manière à évaporer ladite matrice et à réaliser la fusion desdites particules, afin de disposer d'une nappe sèche,
- réaliser un calandrage de ladite nappe sèche de manière à la comprimer et à associer lesdites fibres entre elles par le polypropylène une fois refroidi formant agent de liaison,
- réaliser à partir d'un flan de ladite nappe comprimée, par compression entre deux parois d'un moule de compression à chaud, une coque 2 tridimensionnelle poreuse thermo-comprimée à base desdites fibres de verre, lesdites fibres étant reliées entre elles par le polypropylène,
- disposer ladite coque contre une paroi de moule pour injection réaction (RIM), la face d'aspect 9 de ladite coque étant tournée vers ladite paroi,
- injecter sur ladite coque, au sein de la cavité de moulage définie par ledit moule, un mélange précurseur de mousse - notamment de polyuréthanne
   - élastiquement compressible,
- après expansion de ladite mousse, démouler l'écran 1 obtenu.

Un tel procédé relève d'une réalisation par « voie papetière », en référence à la dispersion du mélange fibres/particules dans une matrice liquide qui est ensuite éliminée.

L'intérêt d'un tel processus, comparativement à une autre façon de procéder consistant à réaliser un co-aiguilletage de fibres de verre avec des fibres de polypropylène destinées à former agent de liaison après leur fusion, est de permettre une liaison des fibres entre elles selon une multiplicité de points de liaison.

Il en résulte la formation d'une nappe sèche, et par la suite d'une coque 2, présentant une rigidité plus importante que si elle était obtenue par le processus susmentionné impliquant un co-aiguilletage.

De la sorte, la rigidification de l'écran 1 apportée par pénétration partielle de mousse dans la coque 2 est améliorée, sachant que ledit écran garde toutefois une souplesse suffisante pour pouvoir être monté ou pourvu de découpes sans qu'il en résulte une détérioration.

Selon une réalisation, la coque 2 est obtenue à partir d'une nappe sèche présentant une masse surfacique comprise entre 500 et 800 g/m², sachant que, dans l'art antérieur, il est possible de partir d'une nappe présentant une masse surfacique de l'ordre de 1000 g/m² ou davantage.

De façon non représentée, il peut être prévu que la nappe soit calandrée avec au moins une couche de protection en non tissé, telle que décrite avant, disposée sur au moins une de ses faces.

## Revendications

1. Ecran (1) de protection acoustique et thermique pour véhicule automobile, ledit écran comprenant :
• une coque (2) tridimensionnelle poreuse thermo-comprimée à base de fibres de verre, lesdites fibres étant reliées entre elles par un agent de liaison,
• une couche ressort (3) interne à base de mousse - notamment de polyuréthanne - élastiquement compressible,
ledit écran présentant en outre les caractéristiques suivantes :
• ladite couche est issue de moulage par injection-réaction (RIM), ladite couche surmoulant ladite coque,
• ladite coque présente une porosité agencée pour permettre à ladite mousse de pénétrer une fraction (4) de l'épaisseur de ladite coque, de manière à créer une peau (5) étanche, de sorte que ledit écran :
∘ soit isolant acoustiquement selon un principe de masse-ressort, ledit écran présentant en outre des propriétés d'absorption acoustique conférées par la fraction d'épaisseur de ladite coque non pénétrée par ladite mousse et restant poreuse,
∘ voie sa rigidité accrue par le renforcement apporté par lesdites fibres enrobées par ladite mousse,
ledit écran étant **caractérisé en ce que** :
• l'agent de liaison est à base de polypropylène,
• la coque (2) comprend entre 45 et 55% en poids de fibres de verre.

2. Ecran selon la revendication 1, **caractérisé en ce que** la peau (5) présente une épaisseur comprise entre 0,3 et 1 mm.

3. Ecran selon l'une des revendications 1 ou 2, **caractérisé en ce que** la coque (2) est pourvue, sur au moins une de ses faces, d'une couche de protection en non tissé.

4. Ecran selon l'une des revendications 1 à 3, **caractérisé en ce que** l'agent de liaison est issu de particules de polypropylène, de manière à assurer une liaison des fibres entre elles selon une multiplicité de points de liaison.

5. Montage d'un écran selon l'une quelconque des revendications 1 à 4, ledit montage comprenant ledit écran et un composant (6) à protéger, ledit composant étant délimité par une paroi (7), la face d'aspect (8) de la couche ressort (3) étant conformée de manière à épouser sensiblement la forme de ladite paroi, de manière à permettre une optimisation de l'isolation acoustique et thermique.

6. Procédé de réalisation d'un écran selon la revendication 4, **caractérisé en ce qu'**il comprend les étapes suivantes :
• réaliser un mélange de fibres de verre et de particules de polypropylène, le pourcentage en poids desdites fibres par rapport au poids total desdites fibres et particules étant compris entre 45 et 55%, ledit mélange étant dispersé dans une matrice liquide,
• réaliser avec ledit mélange dispersé dans ladite matrice une nappe fibreuse déroulée en continu,
• faire passer ladite nappe dans un four de manière à évaporer ladite matrice et à réaliser la fusion desdites particules, afin de disposer d'une nappe sèche,
• réaliser un calandrage de ladite nappe sèche de manière à la comprimer et à associer lesdites fibres entre elles par le polypropylène une fois refroidi formant agent de liaison,
• réaliser à partir d'un flan de ladite nappe comprimée, par compression entre deux parois d'un moule de compression à chaud, une coque (2) tridimensionnelle poreuse thermo-comprimée à base desdites fibres de verre, lesdites fibres étant reliées entre elles par le polypropylène,
• disposer ladite coque contre une paroi de moule pour injection réaction (RIM), la face d'aspect (9) de ladite coque étant tournée vers ladite paroi,
• injecter sur ladite coque, au sein de la cavité de moulage définie par ledit moule, un mélange précurseur de mousse - notamment de polyuréthanne
- élastiquement compressible,
• après expansion de ladite mousse, démouler l'écran (1) obtenu.

7. Procédé selon la revendication 6, **caractérisé en ce que** la coque (2) est obtenue à partir d'une nappe sèche présentant une masse surfacique comprise entre 500 et 800 g/m².

## Patentansprüche

1. Akustische und thermische Abschirmung (1) für ein Kraftfahrzeug, wobei die Abschirmung umfasst:
• eine thermisch komprimierte poröse dreidimensionale Schale (2) auf der Basis von Glasfasern, wobei die Fasern durch ein Bindemittel miteinander verbunden sind,
• eine innere, elastisch komprimierbare Federschicht (3) auf der Basis von Schaumstoff - insbesondere Polyurethan, wobei die Abschirmung ferner die folgenden Merkmale aufweist:
• die Schicht ist aus Reaktionsspritzgießen (RIM) hervorgegangen, wobei die Schicht die Schale überformt,
• die Schale weist eine Porosität auf, die ausgebildet ist, um dem Schaumstoff zu ermöglichen, in einen Teil (4) der Dicke der Schale einzudringen, um eine dichte Haut (5) zu bilden, so dass die Abschirmung:
o gemäß einem Masse-Feder-Prinzip akustisch isoliert ist, wobei die Abschirmung ferner akustische Adsorptionseigenschaften aufweist, die von dem Teil der Dicke der Schale verliehen werden, der nicht von dem Schaumstoff durchdrungen ist und porös bleibt,
o bezüglich ihrer Festigkeit durch die Verstärkung mittels der von dem Schaumstoff umhüllten Fasern verstärkt wird,
wobei die Abschirmung **dadurch gekennzeichnet ist, dass**:
• das Bindemittel auf der Basis von Polypropylen ist,
• die Schale (2) zwischen 45 und 55 Gew.-% Glasfasern umfasst.

2. Abschirmung nach Anspruch 1, **dadurch gekennzeichnet, dass** die Haut (5) eine Dicke aufweist, die zwischen 0,3 und 1 mm liegt.

3. Abschirmung nach einem der Ansprüche 1 oder 2, **dadurch gekennzeichnet, dass** die Schale (2) auf mindestens einer ihrer Flächen mit einer Schutzschicht aus Vlies versehen ist.

4. Abschirmung nach einem der Ansprüche 1 bis 3, **dadurch gekennzeichnet, dass** das Bindemittel aus Polypropylenpartikeln hervorgegangen ist, so dass eine Verbindung der Fasern untereinander gemäß einer Vielzahl von Verbindungspunkten gewährleistet ist.

5. Montage einer Abschirmung nach einem der Ansprüche 1 bis 4, wobei die Montage die Abschirmung und ein zu schützendes Bauteil (6) umfasst, wobei das Bauteil von einer Wand (7) begrenzt ist, wobei die Sichtfläche (8) der Federschicht (3) derart gestaltet ist, dass sie sich etwa an die Form der Wand derart anpasst, dass eine Optimierung der akustischen und thermischen Isolierung gestattet ist.

6. Verfahren zur Herstellung einer Abschirmung nach Anspruch 4, **dadurch gekennzeichnet, dass** es die folgenden Schritte umfasst:
• Herstellen einer Mischung aus Glasfasern und Polypropylenpartikeln, wobei der Gewichtsanteil der Fasern in Bezug auf das Gesamtgewicht der Fasern und Partikel zwischen 45 und 55 % liegt, wobei die Mischung in einer flüssigen Matrix dispergiert ist,
• Herstellen, mit der in der Matrix dispergierten Mischung, einer kontinuierlich ausgerollten Matte,
• Verbringen der Matte in einen Ofen derart, dass die Matrix verdampft und die Verschmelzung der Partikel durchgeführt wird, um über eine trockene Matte zu verfügen,
• Kalandern der trockenen Matte derart, dass sie komprimiert wird und die Fasern miteinander durch das Polypropylen verbunden werden, das, sobald es abgekühlt ist, ein Bindemittel bildet,
• Herstellen, aus einem Rohling der komprimierten Matte, durch Kompression zwischen zwei Wänden einer Warmkompressions-Form, einer thermisch komprimierten porösen dreidimensionalen Schale (2) auf der Basis der Glasfasern, wobei die Fasern durch das Polypropylen miteinander verbunden sind,
• Anordnen der Schale an einer Wand einer Form zwecks Reaktionsspritzgießens (RIM), wobei die Sichtfläche (9) der Schale zur Wand gedreht ist,
• Spritzgießen, auf die Schale, in den von der Form festgelegten Formhohlraum, eines elastisch komprimierbaren Schaumstoffvorläufers - insbesondere Polyurethan,
• nach Expansion des Schaumstoffs, entformen der erhaltenen Abschirmung (1).

7. Verfahren nach Anspruch 6, **dadurch gekennzeichnet, dass** die Schale (2) aus einer trockenen Matte erhalten wird, die eine flächenbezogene Masse zwischen 500 und 800 g/m² aufweist.

## Claims

1. Acoustic and thermal shield (1) for a motor vehicle, said shield comprising:
* a thermo-compressed porous three-dimensional shell (2) based on glass fibers, said fibers being joined together by a binding agent,
* a foam-based inner spring layer (3) - in particular made of polyurethane - elastically compressible,
said shield additionally having the following features:
* said layer is produced by reaction injection molding (RIM), said layer overmolding said shell,
* said shell has a porosity arranged in order to enable said foam to penetrate a fraction (4) of the thickness of said shell, so as to create a leaktight skin (5), such that said shield:
o is acoustically insulating according to a mass-spring principle, said shield additionally having acoustic absorption properties conferred by the fraction of thickness of said shell not penetrated by said foam and remaining porous,
∘ has the rigidity thereof increased by the reinforcement brought by said fibers coated by said foam,
said shield being **characterised in that**:
* the binding agent is based on polypropylene,
* the shell (2) comprises between 45 and 55% by weight of glass fibers.

2. Shield according to claim 1, **characterised in that** the skin (5) has a thickness of between 0.3 and 1mm.

3. Shield according to one of claims 1 or 2, **characterised in that** the shell (2) is provided, on at least one of the faces thereof, with a non-woven protective layer.

4. Shield according to one of claims 1 to 3, **characterised in that** the binding agent is produced by polypropylene particles, so as to ensure a binding of the fibers to one another according to a multiplicity of binding points.

5. Mounting of a shield according to any one of claims 1 to 4, said mounting comprising said shield and a component (6) to be protected, said component being delimited by a wall (7), the visible face (8) of the spring layer (3) being shaped so as to substantially mold the shape of said wall, so as to make it possible for an optimisation of the acoustic and thermal insulation.

6. Method for producing a shield according to claim 4, **characterised in that** it comprises the following steps:
* producing a mixture of glass fibers and polypropylene particles, the percentage by weight of said fibers with respect to the total weight of said fibers and particles being between 45 and 55%, said mixture being dispersed in a liquid matrix,
* producing, with said mixture dispersed in said matrix, a continuously unwound fibrous ply,
* making said ply pass into a furnace so as to evaporate said matrix and to achieve the fusion of said particles, in order to have a dry ply,
* producing a calendaring of said dry ply so as to compress it and to connect said fibers to one another by the polypropylene once cooled forming a binding agent,
* producing, from a blank of said compressed ply, by compression between two walls of a hot compression mold, a thermo-compressed porous three-dimensional shell (2) based on said glass fibers, said fibers being joined together by the polypropylene,
* arranging said shell against a wall of a reaction injection mold (RIM), the visible face (9) of said shell being arranged towards said wall,
* injecting on said shell, within the molding cavity defined by said mold, a precursory foam mixture - in particular made of polyurethane - elastically compressible,
* after expansion of said foam, demolding the shield (1) obtained.

7. Method according to claim 6, **characterised in that** the shell (2) is obtained from a dry ply having a surface mass of between 500 and 800g/m².
